Europäisches Patentamt

(19) European Patent Office

Office européen des brevets

(11) Numéro de publication: **0 123 565**
**B1**

(12) **FASCICULE DE BREVET EUROPEEN**

(45) Date de publication du fascicule du brevet:
13.05.87

(51) Int. Cl.⁴: **B 01 J 23/90**, B 01 J 8/40, B 01 J 8/38, F 27 B 9/24

(21) Numéro de dépôt: **84400088.5**

(22) Date de dépôt: **17.01.84**

(54) **Procédé et appareil de transport et de chauffage de matériaux granulés.**

(30) Priorité: **15.03.83 FR 8304350**

(43) Date de publication de la demande:
**31.10.84 Bulletin 84/44**

(45) Mention de la délivrance du brevet:
**13.05.87 Bulletin 87/20**

(84) Etats contractants désignés:
**BE DE GB IT LU NL**

(56) Documents cités:
**DE - A - 1 807 216**
**FR - A - 1 366 401**
**FR - A - 1 578 125**
**FR - A - 2 372 655**
**GB - A - 905 659**
**GB - A - 934 651**

(73) Titulaire: **EURECAT EUROPEENNE DE RETRAITEMENT DE CATALYSEURS, Quai Jean Jaurès B.P. 45, F-07800 La Voulte sur Rhone (FR)**

(72) Inventeur: **Berrebi, Georges, 12, Allée de la Résidence du Parc, F-26000 Valence (FR)**

(74) Mandataire: **Colas des Francs, Jean, Institut Français du Pétrole 4, Avenue de Bois Préau, F-92502 Rueil-Malmaison (FR)**

ACTORUM AG

## Description

L'invention concerne un procédé et un appareillage pour activer, réactiver ou régénérer un catalyseur solide de traitement ou de conversion d'hydrocarbures.

Le catalyseur traité conformément à l'invention est utilisé sous forme de particules solides, ces particules pouvant avoir diverses formes telles que billes, concassés, extrudés, pastilles, etc...

Les catalyseurs activables, réactivables ou régénérables selon l'invention sont notamment les catalyseurs de traitement, d'hydrotraitement, de viscoréduction et de conversion ou d'hydroconversion d'hydrocarbures et/ou de coupes d'hydrocarbures d'origines diverses; par exemple, à titre de coupes d'hydrocarbures, on citera des charges liquides en provenance de distillats issus de bruts pétroliers lourds, de résidus de la distillation d'hydrocarbures atmosphérique et sous vide, en provenance d'effluents de la liquéfaction du charbon etc... On citera encore les charges liquides d'origine pétrolière ou non, destinées à subir l'un ou l'autre des traitements choisis par exemple parmi la déshydration, l'hydrosulfuration, l'hydrodénitrification, la désulfuration, l'hydrodésulfuration, la déshydrohalogénation, le reformage, les réactions de production d'hydrocarbures aromatiques, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallisation, etc...

Lors de tels traitements catalytiques, on constate une désactivation souvent rapide du catalyseur dûe à la présence de poisons catalytiques, à la formation de coke, au dépôt de certains métaux etc... Cette désactivation nécessite le remplacement fréquent de tout ou partie du lit catalytique.

Le catalyseur est à base d'au moins un oxyde d'un métal (aluminium par exemple) ou de métalloïde (silicium par exemple). Généralement le catalyseur est constitué (a) d'un support (ou matrice) à base d'un tel oxyde et (b) d'une phase active renfermant au moins un métal, accompagné ou non de précurseurs ou promoteurs métalliques.

Parmi les supports, on peut citer à titre d'exemples, toutes les variétés d'alumine, les silices, les silice-alumines, tous ces divers oxydes étant utilisés sous une forme amorphe ou sous une forme cristallisée (zéolites) ou sous forme de mélange d'oxydes amorphes et cristallisés. On peut citer encore, à titre d'oxydes utilisables comme supports, utilisés seuls ou en mélange, les magnésies, les bauxites, les argiles, les kieselguhrs, les silice-magnésies, les alumines magnésies, les alumine-bores etc...

Parmi les métaux constituant la phase active du catalyseur, on peut citer pratiquement tous les métaux de la classification périodique des éléments et en particulier, utilisés seuls ou en mélange, le fer, le cobalt, le nickel, le tungstène, le molybdène, le cuivre, l'argent, l'or, les métaux nobles de la famille du platine, le germanium, l'étain, le plomb, l'indium, le thallium, le titane, le rhénium, le manganèse, le chrome, le vanadium, etc... Ces métaux sont utilisés, par exemple, sous forme métallique, ou sous la forme oxyde ou sulfure (notamment les oxydes et sulfures de cobalt, molybdène, tungstène, nickel, fer).

L'activation ou la réactivation ou la régénération de catalyseurs nécessite généralement au moins une étape de chauffage du catalyseur pour éliminer de chaque grain ou particule catalytique au moins un type d'impurités. Ainsi, par exemple, les catalyseurs qui ont été utilisés dans les réactions de désulfuration ou hydrodésulfuration d'hydrocarbures renferment des teneurs importantes de soufre et de carbone, éléments qu'il convient d'éliminer avant réutilisation du catalyseur.

Généralement dans l'art antérieur, l'activation, la réactivation et la régénération de catalyseur nécessitent deux étapes. Ainsi, à titre d'exemple, un catalyseur usé d'hydrotraitement et/ou d'hydrodésulfuration renferme des pourcentages importants de soufre et de carbone. Dans ce cas, la régénération du catalyseur se fait par voie thermique en deux étapes, la première effectuée entre, par exemple, environ 180 et 350°C et de préférence vers 200 à 250°C environ, ayant pour but l'élimination d'une partie au moins du soufre et la deuxième étape effectuée entre environ 400 et 600°C et par exemple vers 480°C environ, ayant pour but l'élimination d'une partie au moins du carbone (décokage). Durant ces opérations, il faut fournir de l'air d'une part pour la combustion et d'autre part pour maîtriser l'évacuation des calories. Ces opérations se font, en 2 étapes, dans des fours à moufle en laboratoire ou dans des fours de grande capacité à l'échelle industrielle. La première et la deuxième étapes peuvent être réalisées ou bien dans deux fours distincts ou bien dans le même four, four dans lequel on effectue ainsi successivement chacune des deux étapes. Utiliser industriellement deux fours distincts est onéreux du fait de la taille importante de tels fours. N'utiliser qu'un seul four est d'un emploi peu souple en raison de pertes de temps importantes, ne serait ce que pour attendre la montée en température nécessaire pour passer de la première étape à la deuxième ou l'abaissement de température pour repasser ensuite en première étape pour le traitement d'autres lots de catalyseur.

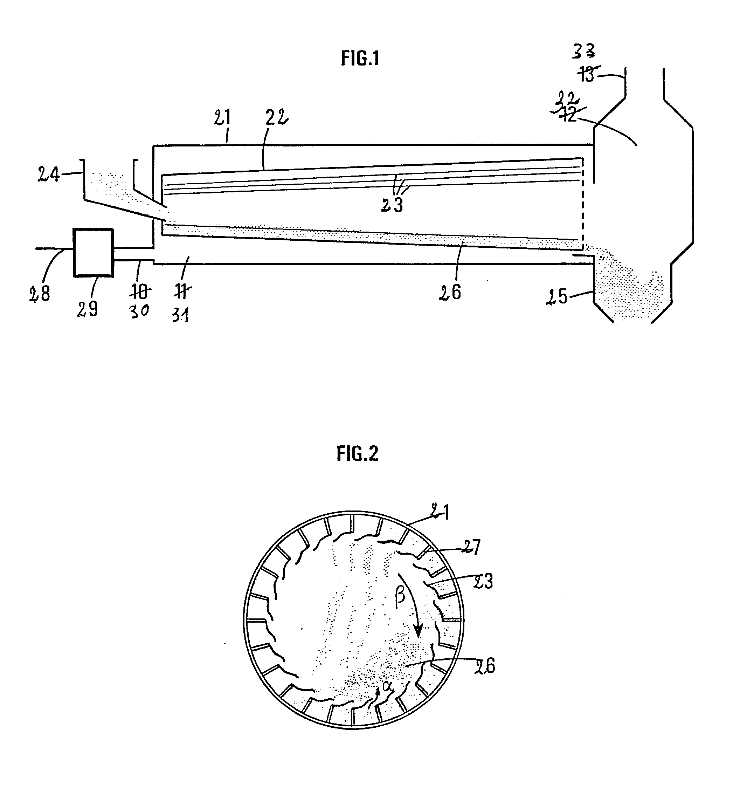

On a utilisé récemment un four particulier rotatif, illustré par la figure 1 dans laquelle ce four est dessiné en coupe longitudinale et par la figure 2 (section de l'appareil). Cet appareil peut comporter par exemple, une chambre allongée sensiblement cylindrique et horizontale qui constitue la paroi de l'enceinte d'activation ou de réactivation ou de régénération. Le traitement du catalyseur est effectué à l'intérieur de la chambre (21) dans une zone ou coquille 22, de préférence de forme tronconique ou pyramidale (l'angle moyen que fait l'axe du cône ou de la pyramide avec l'une des génératrices du cône ou l'une des arêtes de la pyramide est inférieur à 10°, de préférence entre 1 et 5°). La chambre (21) tourne lentement sur elle-même, le long de son axe. Le catalyseur est introduit, généralement en continu par la conduite (24) et est soutiré, également en continu par la conduite (25).

2

On a représenté par (26) le lit de particules cataly‑tiques.

Des louvres ou lumières ou fenêtre d'aération (23) sont disposés, régulièrement ou non, le long de ladite chambre d'une extrémité à l'autre de la zone (21). Sur la figure 2, on aperçoit un type préféré de lumiè‑res (23) fixées par des montants (27) aux parois de la chambre (21). De l'air, ou un gaz renfermant de l'oxygène, est introduit par la conduite (28), est porté dans une zone de chauffage (29) à la tempéra‑ture nécessaire pour le traitement du catalyseur et, par la conduite (30), est introduit dans l'espace (31), d'où à travers les lumières (23), il entre en communi‑cation [flèches telles que (α) sur la figure 2] avec le catalyseur. La rotation lente du four, matérialisée par la flèche (β) de la figure 2 assure un brassage entre les solides et les gaz. Les gaz sont évacués par la zone 32 vers l'orifice 33.

La rotation du four s'effectue à une vitesse com‑prise généralement entre 0,2 et 7,5 tours par minute et d'une manière préférée entre 0,4 et 0,8 tours par minute.

Cet appareil, dit rotatif, peut donner des résultats appréciables lorsqu'il est utilisé, par exemple, d'abord vers 170-350 ou 250-300°C ou encore 170-245 ou 180-290°C, pour le strippage (élimina‑tion) des hydrocarbures résiduels absorbés par la masse catalytique et pour l'élimination de la majeure partie du soufre retenu par le catalyseur dans les réactions d'hydrotraitement ou de désulfuration de catalyseurs, puis lorsqu'il est utilisé ensuite vers 500° pour éliminer les dépôts carbonés du cataly‑seur. Dans la présente invention, on utilise un appa‑reil d'un autre type.

Conformément à l'invention, on fait cheminer les particules catalytiques, à l'intérieur d'au moins une zone allongée rectiligne (éventuellement inclinée, son axe longitudinal faisant par rapport à l'horizon‑tale un angle inférieur à ±5°, généralement infé‑rieur à ±3°) et munie d'au moins une paroi (pouvant présenter une inclinaison inférieure à ±15°, de pré‑férence inférieure à ±10° par rapport à l'axe longitu‑dinal de la zone allongée) qui soutient les particules catalytiques (et leur sert donc ainsi de plancher), le cheminement des particules catalytiques, depuis une zone d'entrée dans la zone allongée jusqu'à une zone de sortie de la zone allongée, étant assuré par des vibrations, engendrées par une énergie vibra‑toire, qui provoquent le déplacement horizontal de chaque particule catalytique sur ladite paroi qui la supporte, le chauffage desdites particules catalyti‑ques étant réalisé au moyen d'au moins une plaque émettrice d'ondes électromagnétiques disposée au‑dessus de ladite paroi qui supporte lesdites particules catalytiques sur au moins une partie de cette paroi.

Le procédé selon l'invention pour activer, réactiver ou régénérer des particules catalytiques solides con‑siste ainsi

(a) à faire circuler, de préférence en continu, les‑dites particules depuis une zone d'entrée jusqu'à une zone de sortie d'au moins une chambre allongée dont l'axe longitudinal fait avec l'horizontal un angle infé‑rieur à ±5°, lesdites particules étant soutenues par au moins une paroi, sur laquelle elles se déplacent, et dont l'angle d'inclinaison par rapport audit axe longi‑tudinal est compris entre 0 et ±15°, le cheminement desdites particules catalytiques étant obtenu en fai‑sant vibrer ladite chambre allongée à une amplitude telle qu'un mouvement de translation est communi‑qué aux particules de catalyseur sur la longueur de ladite chambre, avec une distribution statistique sen‑siblement uniforme sur la section de ladite chambre, une vitesse différentielle assurant la circulation con‑tinue des particules.

(b) à chauffer lesdites particules catalytiques, par convection et/ou rayonnement, au moyen d'ondes électromagnétiques identiques ou différentes, la ou les longueurs d'onde utilisées étant comprises géné‑ralement entre environ 0,38 µm et 50 mm environ, couvrant ainsi la lumière visible (0,38 à 0,76 µm), les infra-rouges (0,75 µm à 1 mm) et une partie du domaine des microondes (1 à 50 mm).

D'une façon préférée, on utilise une ou des lon‑gueurs d'onde comprise(s) entre 0,5 µm et 15 mm. On apprécie plus particulièrement les rayonnements infra-rouge ou proches de l'infra-rouge (par exemple 0,75 µm à 1,5 mm).

Conformément à l'invention, le rayonnement et/ou la convection est effectué au moyen d'au moins une plaque, ou cassette, émettrice de rayon‑nement, ladite plaque étant placée sensiblement horizontalement dans ladite chambre allongée, au‑dessus du trajet du lit des particules catalytiques.

L'utilisation d'une série de parois adjacentes les unes aux autres, possédant éventuellement une légère inclinaison, inférieure à 15° en haut ou en dessous de l'axe longitudinal de la chambre allongée (soit ±15° par rapport à cet axe) et généralement de l'ordre de 1 à 10°, permet à chaque particule cataly‑tique de tomber de chaque extrémité d'une paroi sur l'extrémité de la paroi suivante. Au cours de cette chute, la particule généralement se retourne complè‑tement ou non et présente ainsi au rayonnement électromagnétique une autre partie de sa surface géométrique, de sorte qu'à la sortie de ladite cham‑bre d'activation, de réactivation ou de régénération, toutes les surfaces géométriques de la particule catalytique ont été soumises au rayonnement élec‑tromagnétique.

Arbitrairement, on a utilisé dans le texte de la pré‑sente demande de brevet, le mot «paroi» pour définir le ou les planchers (ou tapis) qui soutiennent le lit de particules catalytiques en mouvement.

Généralement la ou les parois qui soutiennent les particules catalytiques sont sensiblement et réguliè‑rement discontinues (grille par exemple), c'est-à-dire sont parsemées d'au moins plusieurs ouvertures régulièrement espacées dont la taille est suffisam‑ment petite pour empêcher les particules de cata‑lyseur de passer au travers desdites parois mais suffisamment grande pour permettre le passage de gaz à travers ces parois, comme il sera expliqué plus loin.

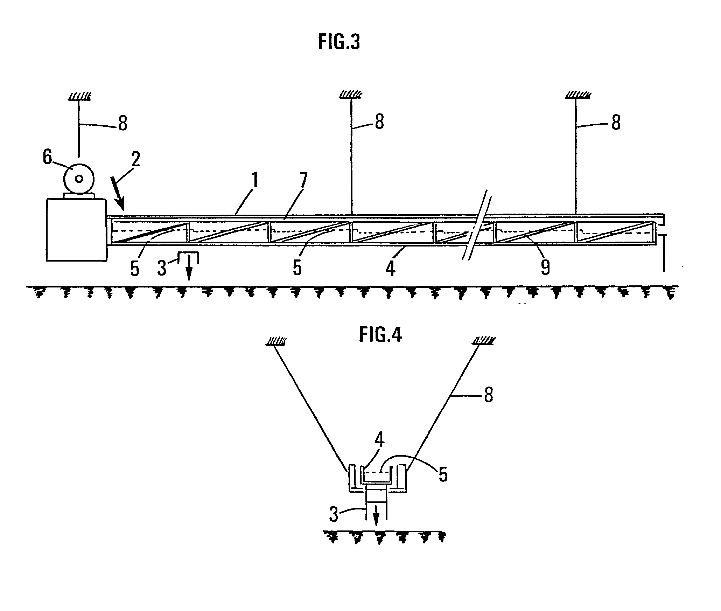

L'appareil selon l'invention comporte plus particu‑lièrement (voir la figure 3 donnée à titre d'exemple):
— au moins une chambre (1) allongée et sensible‑ment horizontale (angle avec l'horizontale : 0 à ±5°),
— des moyens (2) pour introduire des particules solides à une extrémité de la chambre,

— des moyens pour soutirer les particules solides à l'autre extrémité de la chambre,

— une auge (4) disposée sur toute la longueur de la chambre allongée, ladite auge soutenant au moins une paroi et de préférence une pluralité de parois (5) discontinues (chaque paroi étant généralement une grille ou tout autre dispositif adéquat) et adjacentes et toutes de préférence en pente douce, le niveau supérieur de chaque paroi étant placé vers l'extrémité de la chambre par laquelle on soutire les particules solides, l'angle d'inclinaison de chaque paroi, par rapport à l'axe longitudinal de la chambre étant inférieur à 15°, (le sens de la pente descendante pouvant être ainsi en sens contraire de celui du cheminement des particules), lesdites parois étant utilisées comme tapis pour soutenir les particules catalytiques introduites dans ladite chambre,

— des moyens (6) pour engendrer de l'énergie vibratoire, et provoquer des vibrations de l'auge qui engendrent les vibrations desdites parois nécessaires en vue d'obtenir le déplacement des particules catalytiques sur ces parois depuis l'entrée des particules dans ladite chambre jusqu'à leur sortie,

— des moyens de chauffage des particules catalytiques, ces moyens étant constitués d'au moins une plaque en forme de cassette (7), c'est-à-dire parallélépipédique ou de toute façon adéquate, ladite plaque étant disposée au-dessus desdites parois et émettant une onde ou un spectre d'ondes qui a pour but de chauffer lesdites particules qui circulent sur lesdites parois.

Pour engendrer des vibrations de la chambre, on utilise généralement un moteur, électrique ou autre. Le moteur et la chambre sont généralement supportés par des suspensions souples, la vitesse angulaire engendrée par au moins un arbre à balourds de sortie du moteur peut faire vibrer la chambre, donc l'auge, donc en conséquence la ou les parois sur lesquelles sont disposées les particules catalytiques qui avancent.

Un transporteur par inertie dans le cadre de l'invention est constitué d'une auge à section le plus généralement rectangulaire à l'extrémité de laquelle est montée une excitatrice à inertie transmettant un mouvement de va et vient sensiblement parallèle à chaque paroi. Les particules catalytiques sur chaque paroi restent donc au contact de la paroi lorsque celle-ci avance et glissent sur elles lorsqu'elle recule. Cette explication est schématique, le comportement réel des particules catalytiques étant plus complexe. Mais le résultat est que le produit avance sans microprojections, sur la paroi, par glissement. De nombreux avantages sont inhérents à ce système:

— pas de réactions dynamiques au sol,

— fréquences d'excitation basses - grande robustesse mécanique,

— douceur de fonctionnement, bruit faible,

— produit manutentionné avec douceur (pas de chocs ni microvibrations).

Dans la présente invention, on peut opérer également en deux étapes comme il a été fait dans l'art antérieur; on peut ainsi soit utiliser le même four de l'invention pour réaliser successivement chacune des deux étapes (les délais d'attente de la température adéquate sont moins longs que dans l'art antérieur) soit utiliser deux fours en série conformes à l'invention, soit encore utiliser en série un four de l'art antérieur (décrit ci-dessus) pour la première étape et un four selon l'invention pour la deuxième étape. Un procédé préféré consiste à utiliser, combiné au four selon l'invention, le four particulier rotatif décrit plus haut dont un des modes de réalisation est illustré par la figure 1 (coupe longitudinale) et la figure 2 (section de l'appareil).

On utilise la combinaison de ce type de four rotatif utilisé pour effectuer la première étape et du type de four selon l'invention pour effectuer la deuxième étape. Cela permet l'obtention de résultats particulièrement favorables à l'activation, la réactivation et/ou la régénération de catalyseurs.

La figure 3 décrite plus haut représente un mode de mise en oeuvre de l'invention (avec des parois ou tapis en cascade). On y distingue, outre les éléments déjà énumérés ci-dessus, une sortie d'air (3), les éléments (8) de soutien du four et la charpente 9 de la chambre.

L'appareil en coupe est illustré par la figure 4 et montre plus particulièrement la disposition de l'auge 4 et les soutiens (8) du four.

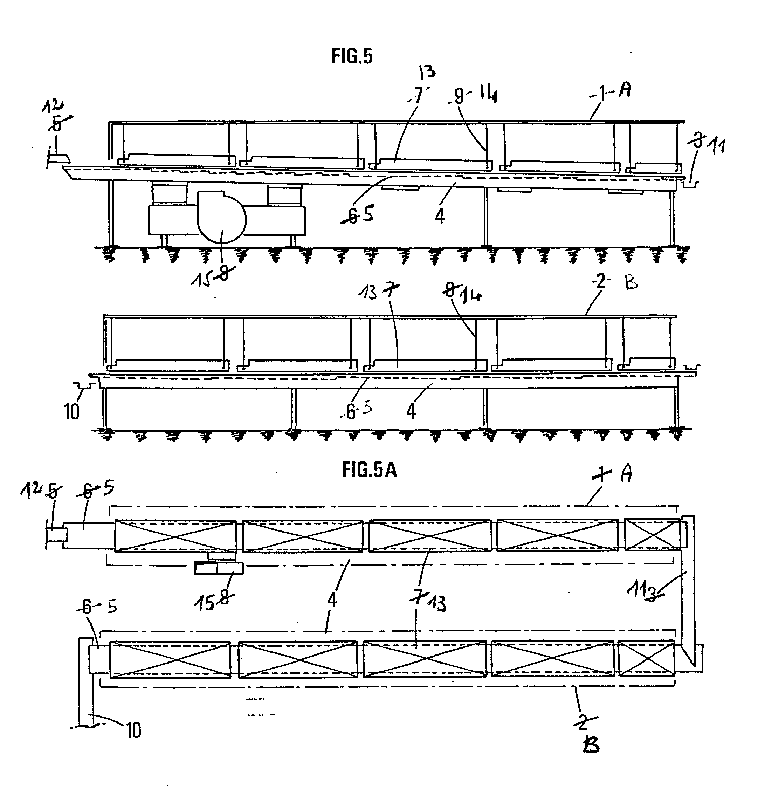

La figure (5) et la figure aérienne 5A illustrent un dispositif de four en deux parties, placées sensiblement côté à côté, le catalyseur, après traitement, revenant sensiblement au voisinage du point de départ avant traitement; cela permet d'économiser d'autres moyens de transport, quelqu'ils soient, pour ramener les particules catalytiques vers leur point de départ. Ainsi sur les figures 5 et 5A, dans la première partie (A) du four, le catalyseur circule de gauche à droite puis dans la deuxième partie (B) du four, circule de droite à gauche. Le passage des particules catalytiques d'une partie à l'autre du four se fait par tout moyen adéquat par exemple au moyen d'un tapis roulant (11) (voir figure 5A). Sur la figure 5 et 5A, on distingue l'auge (4), un dispositif (12) d'admission des particules catalytiques qui cheminent sur des parois (5) sous des cassettes (13) de chauffage maintenues par des moyens schématisés par (14). Les parois (5), de longueurs sensiblement identiques (ou croissantes sur la figure), et éventuellement légèrement inclinées (parois ou tapis disposés ainsi en cascade), vibrent sous l'effet du moteur que l'on n'a pas représenté sur ces figures 5 et 5A. A la fin du traitement du catalyseur, celui-ci est évacué par la conduite (10). On crée, par le ventilateur (15), un courant d'air (ou de tout autre gaz) qui traverse le lit catalytique déposé sur les parois en cascade (5). Cet air (ou ce gaz) permet de véhiculer l'oxygène nécessaire aux réactions d'oxydation et d'évacuer les calories éventuellement produites par ces réactions.

Pour la réalisation pratique du four selon l'invention, on ajoutera que la couche de particules catalytiques, circulant sur les parois (ou tapis) disposées dans l'auge, est comprise entre 0,5 et 80 mm d'épaisseur et de préférence comprise entre 1,2 et 35 mm d'épaisseur pour une exposition aux dispositifs de chauffage variant entre 1 et 50 minutes environ. Le débit de circulation de particules catalytiques est avantageusement compris entre 100 et 2000 kg/heure. Ainsi à titre d'exemple, on peut avec une installation d'une puissance installée de 800 KW environ, traiter une couche de 20 mm de catalyseur avec un débit de 1000 kg/h, avec une exposition de chaque particule d'une quinzaine de minutes et même moins. Le débit de circulation des particules catalytiques est généralement compris entre 100 et 2000 kg/heure.

Un avantage du procédé et de l'appareil selon l'invention est le suivant: Dans l'art antérieur, il faut fournir et chauffer de l'air pour réaliser la régénération de catalyseur par voie thermique ou convection et/ou conduction (d'où généralement une grosse dépense en propane, combustible utilisé pour ce type de chauffage).

Ensuite il convient d'utiliser à nouveau de l'air pour maîtriser l'évacuation des calories. Dans la présente invention, les calories nécessaires par exemple au brûlage du carbone, proviennent d'une source électromagnétique: ce système a l'avantage de ne pas chauffer l'air ambiant mais de concentrer les calories directement sur les particules catalytiques (le transfert de chaleur se fait alors plus par rayonnement que par simple convection ou conduction et il est difficile de parler de la température dans la chambre qui peut être relativement faible alors que les grains de particules se trouvent, eux, aux températures nécessaires à leur traitement. En élevant la puissance de l'énergie électromagnétique, on pourrait les porter facilement à une température de 1000°C ou davantage).

Le matériel utilisé pour chauffer le catalyseur est par exemple constitué de cassettes de forme parallélépipédique dont la puissance, à titre d'exemple peut être de l'ordre de 20 à 150 KW par $m^2$ de surface active de rayonnement et de préférence, de 50 à 100 KW, ces cassettes étant disposées au-dessus des tapis (parois) de circulation de catalyseur et couvrent ces tapis, hermétiquement si nécessaire; il n'est cependant pas nécessaire que ces cassettes soient adjacentes les unes aux autres et des trous peuvent apparaître entre les cassettes notamment pour laisser le passage aux divers moyens de contrôles pyrométriques optiques et infra-rouge etc...; c'est le cas notamment dans les figures 5 et 5A où les particules catalytiques ne sont pas recouvertes de moyens de chauffage quand elles passent d'une partie à l'autre du four. Ces tapis peuvent être à fond plein ou peuvent être, préférablement du type tissu métallique ou du type à grille (maille rectangulaire ou carrée ou ronde etc... par exemple d'environ 0,2 mm de largeur ou de diamètre), pour permettre la circulation d'air à travers le tapis. Ainsi, on peut prévoir, à titre d'exemple, un ensemble de ventilateurs au-dessus de la rampe de chauffage (débit par exemple d'environ 40 $m^3$/h/KW sous 2 mm de colonne d'eau), un ensemble de ventilateurs d'extraction (de débit faible), (15) sur les figures 5 et 5A, permettant de convoyer l'air ou tout autre gaz à travers la couche de catalyseur, le débit, par l'intermédiaire de registres, variant de 1000 à 25000 Nm3/h par exemple et de préférence de 4000 à 12000 Nm3/h, pour l'ensemble de la ventilation pour les débits de catalyseur indiqués précédemment. La hauteur de couche de particules catalytiques dépend ainsi à la fois du temps d'exposition au rayonnement électromagnétique et de l'importance de l'aération et du brassage par de l'air ou un autre gaz. La distance des lampes émettrices du rayonnement à la partie inférieure de la couche de particules catalytiques est comprise par exemple entre 40 et 400 mm et de préférence entre 100 et 140 mm.

D'autres avantages sont conférés par le procédé et l'appareil de l'invention: avec ce type de four, il est par exemple, possible de calmer la vitesse et/ou l'agitation des grains ou des particules catalytiques en réglant convenablement le moteur qui communique la vitesse de transmission à l'auge. Une telle régulation n'est pas possible ni dans un four conventionnel ni même dans le four rotatif décrit précédemment.

Dans l'art antérieur, et par exemple dans le cas où l'on emploie le four rotatif décrit précédemment (pour la régénération d'un catalyseur de désulfuration), à l'issue de la première étape effectuée par exemple vers 300°, il faut soutirer le catalyseur du four, généralement le remettre en flûts et le rapporter à l'entrée du four pour procéder à la deuxième étape qui est effectuée vers 500°C. D'où des pertes de temps importantes et une usure rapide de certaines pièces du four soumis à des températures différentes à chaque étape de régénération, donc à des réparations souvent fréquentes (il y a des cassures dûes à des «retraits» pouvant atteindre 10 cm) entraînant l'immobilisation de l'appareil.

Notre appareillage utilisé, par exemple pour réaliser la deuxième étape de régénération (la première étape étant effectuée par exemple dans le four rotatif entre par exemple 170 et 350°C ou 250-300°C ou encore 170-245°C ou de préférence entre 180 et 290°C, donne plus de souplesse à la régénération: le catalyseur soutiré du four rotatif (ou de tout autre type de four) peut être envoyé dans le four selon l'invention sans avoir été refroidi et sans avoir été soumis à un transport: il suffit de placer l'entrée du four selon l'invention à proximité de la sortie du premier four. De cette façon, dans un tel système de fours en série, l'inertie thermique est nettement améliorée. En outre dans le four selon l'invention, le séjour de chaque particule catalytique est très court, de l'ordre de 1 à 50 minutes, de préférence de 2 à 25 minutes au lieu de 2 à 10 heures dans les fours conventionnelles ou dans le four dit rotatif. L'emploi d'un four selon l'invention, conjointement à un four rotatif par exemple, permet au minimum de doubler la capacité de régénération puisque le four dit rotatif n'est plus utilisé pour réaliser la deuxième étape du procédé de régénération, donc est à nouveau libre pour le traitement d'un nouveau lot de catalyseur usé; et ce four rotatif sera ainsi maintenu toujours à la même température et ne sera plus soumis ni à la haute température utilisée en deuxième étape ni aux dilatations-retraits qui risquaient d'abréger son existence. En fait les temps de séjour dans le four selon l'invention étant très courts, ce four peut éventuellement être utilisé pour d'autres applications industrielles pendant le déroulement de la première étape de régénération si l'on a choisi de faire celle-ci dans un réacteur classique. On ajoutera comme autre avantage du four selon l'invention, l'aspect propreté. Ce type d'appareillage s'encrasse moins que les fours conventionnels et ce d'autant plus qu'il travaille à des températures nettement moins élevées. En outre les différentes parties de l'appareil sont facilement accessibles. Un autre avantage encore est la souplesse d'utilisation d'un tel appareil: par exemple, il peut se présenter sous la forme d'un grand tapis roulant (avec cascades éventuelles, c'est-à-dire une succession de paliers inclinés ou non comme expliqué précédemment) d'une vingtaine de mètres de longueur et on peut ne mettre en service que la moitié du tapis ou le tiers ou le quart et par exemple utiliser tout ou partie du tapis non utilisé pour d'autres traitements de catalyseurs, à des températures qui ne sont pas nécessairement celles que l'on utilise dans les autres parties du tapis déjà en service.

### EXEMPLE:

On se propose de régénérer un catalyseur ayant servi à l'hydrodésulfuration d'une huile. Ce catalyseur renferme 6% en poids de soufre et 12% en poids de carbone; la surface spécifique du catalyseur neuf est de 220 m$^2$/g.

Le catalyseur neuf est à base d'un support d'alumine de transition de type $\gamma$ ayant une surface spécifique de 245 m$^2$/g et renferme en poids 14% d'oxyde de molybdène Mo O$_3$ et 3% d'oxyde de nickel Ni O.

Quatre méthodes de régénération seront successivement utilisées:

### ESSAI 1:

Dans ce premier essai, non conforme à l'invention, le catalyseur est régénéré dans un appareil de laboratoire, plus précisément dans un four à moufle, en deux étapes, la première à 300°C avec un temps de séjour de 4 heures, en vue d'éliminer la plus grande partie du soufre, et la deuxième étape à 500°C avec un temps de séjour de 4 heures également.

Les résultats sont indiqués dans le tableau I.

### ESSAI 2:

Dans ce deuxième essai, également non conforme à l'invention, on utilise un four industriel du type de celui des figures 1 et 2. On réalise dans ce four, deux passages du catalyseur, le premier passage étant effectué à 230°C avec un temps de séjour de 4 heures et, le deuxième passage étant effectué à 470°C avec également un temps de séjour de 4 heures. Les résultats sont indiqués sur le tableau I. On a traité environ 1000 kg de catalyseur par heure. Ces résultats traduisent uniquement le degré de régénération du catalyseur mais on notera en outre qu'au cours de cette régénération on utilise le même four pour y effectuer les deux passages de catalyseur. En attendant que tout le catalyseur soit sorti du four, après le premier traitement à 230°C, il a fallu stocker le catalyseur, celui-ci s'est donc refroidi et a perdu toute l'énergie qu'il avait préalablement accumulée: sorti du premier passage à la température moyenne de 230°C, sa température est aux environs de 20°C quand il doit être retraité pour son deuxième passage. De plus, le four utilisé a été l'objet d'une fatigue non négligeable quand il travaille à des températures de l'ordre de 500°C (dilatation, usure des galets et des internes). A noter également les volumes d'air très importants utilisés avec ce type de four: les deux niveaux de température (230°C et 470°C) sont atteints par combustion de propane dans une chambre à combustion: pour chacune des deux étapes, pour traiter des quantités industrielles de catalyseur, on utilise généralement 10 t/h d'air qui traverse le catalyseur à régénérer disposé en couche tout au long du four. Il s'ensuit que les quantités de propane utilisé pour le chauffage de l'air se trouvent être d'environ 0,27 tonne propane/tonne de catalyseur en première étape et 0,53 tonne/tonne en deuxième étape (poids rapportés au catalyseur régénéré).

### ESSAI 3 (conforme à l'invention):

En première étape, on utilise le four des figures 1 et 2. On opère à 230°C avec un temps de séjour de 4 heures. On traite environ 1000 kg/h de catalyseur avec un apport d'air de 10 t/h (soit donc 10 t d'air par tonne de catalyseur; généralement, sans que ces valeurs soient limitatives, il convient pour la présente invention, d'utiliser par exemple, dans le four rotatif une masse de gaz chauds comprise entre 2,5 et 14 tonnes par tonne de catalyseur traité).

En deuxième étape, on utilise un rayonnement infra-rouge nécessitant une puissance modérée de 800 KW pour 1000 kg/h de catalyseur à traiter, disposé en couche de 20 mm d'épaisseur, avec circulation d'air à travers le lit de catalyseur, (40 m$^3$ d'air/h/KW). La température moyenne du catalyseur se maintient vers 250°C seulement, pour un temps de séjour de 12 minutes. Les résultats obtenus sont indiqués dans le tableau I.

On notera que l'expérimentation montre que:

1/ Si on travaille sans passage d'air à travers le lit de catalyseur, il convient d'utiliser alors une couche de catalyseur d'environ 10 mm d'épaisseur avec un temps de séjour de l'ordre de 6 minutes,

2/ si on souhaite utiliser une couche de catalyseur de l'ordre de 40 mm d'épaisseur, il faut augmenter le temps d'exposition au rayonnement et utiliser un temps de séjour de l'ordre de 22 minutes, en effectuant un brassage du lit au moyen d'air, tout en pratiquant une extraction d'air sous la grille du convoyeur.

### ESSAI 4 (conforme à l'invention):

On utilise un four à rayonnement pour effectuer chacune des deux étapes de la régénération des catalyseurs.

Dans chacun des deux fours, on utilise une couche de catalyseur de 20 mm d'épaisseur (puissance de 800 KW pour 1000 kg/h de catalyseur à traiter). La première étape est effectuée avec un temps de séjour de 12 minutes, la deuxième étape étant effectuée également avec un temps de séjour de 12 minutes. Les résultats sont indiqués dans le tableau I. Les remarques faites pour l'essai 3 s'appliquent également ici dans l'essai 4.

Sur la base des essais présentés dans le tableau I, on peut constater que les résultats obtenus par le système de rayonnement selon l'invention, outre qu'ils sont obtenus à des températures très nettement inférieures à celles qui sont couramment utilisées dans l'art antérieur, sont obtenus après un temps de séjour particulièrement court, d'où un gain de temps appréciable.

### TABLEAU I

|  | % S en poids | % C en poids | surface spéci-fique (m²/g) | Temps de séjour |
|---|---|---|---|---|
| Catalyseur usé | 6 | 12 | 220 | — |
| **Essai 1** |  |  |  |  |
| • 1ère étape à 300°C | 2,5 | 6 | — | 4 h |
| • 2ème étape à 500°C | 0,4 | 0,25 | 230 | 4 h |
| **Essai 2** |  |  |  |  |
| • 1ère étape à 230°C | 1,5 | 3 | — | 4 h |
| • 2ème étape à 470°C | 0,35 | 0,15 | 235 | 4 h |
| **Essai 3** |  |  |  |  |
| • 1ère étape à 230°C | 1,5 | 3 | — | 4 h |
| • 2ème étape | 0,35 | 0,10 | 240 | 12 mn |
| **Essai 4** |  |  |  |  |
| • 1ère étape | 1,5 | 4 | — | 12 mn |
| • 2ème étape | 0,30 | 0,08 | 245 | 12 mn |

### Revendications

1. Procédé d'activation ou de réactivation ou de régénération de particules catalytiques solides utilisées pour le traitement ou la conversion d'hydrocarbures, procédé comprenant au moins une étape de chauffage des particules catalytiques et caractérisé en ce que pour réaliser cette étape, (a) on fait cheminer en continu, lesdites particules catalytiques dans au moins une chambre allongée (son axe longitudinal faisant par rapport à l'horizontale un angle compris entre 0 et ±5°), lesdites particules cheminant depuis une zone d'entrée dans ladite chambre jusqu'à une zone de sortie de ladite chambre, sur au moins une paroi dont l'angle d'inclinaison par rapport à l'axe de la chambre allongée est compris entre 0 et ±15°, le cheminement des particules étant effectué en faisant vibrer ladite chambre allongée, au moyen d'énergie vibratoire, à une amplitude telle qu'un mouvement de translation soit communiqué auxdites particules catalytiques sur la longueur de ladite chambre, avec une distribution statistique sensiblement uniforme sur la section de ladite chambre, une vitesse différentielle assurant la circulation continue des particules et (b) on assure le chauffage desdites particules dans ladite chambre au moyen d'au moins une zone émettrice d'un rayonnement électromagnétique dont la longueur d'onde ou les longueurs d'onde (identiques ou différentes) sont comprises entre environ 0,38 µm et 50 mm.

2. Procédé selon la revendication 1, dans lequel, afin que chaque particule catalytique puisse présenter toutes ses surfaces géométriques au rayonnement électromagnétique, ladite chambre allongée renferme plusieurs parois adjacentes, dont l'angle d'inclinaison est inférieur à ±15° (par rapport à l'axe longitudinal de la chambre allongée) et disposées sur sensiblement toute la longueur de ladite chambre, permettant ainsi à chaque particule catalytique lorsqu'elle tombe d'une paroi sur la paroi suivante de présenter au rayonnement une autre partie de sa surface géométrique.

3. Procédé selon la revendication 1, dans lequel ladite paroi est discontinue de façon à ce qu'un gaz puisse circuler dans ladite chambre à travers le lit de particules catalytiques.

4. Procédé selon l'une des revendications 1 à 3, dans lequel la ou les longueurs d'onde du rayonnement est ou sont comprises entre environ 0,5 µm et 15 mm.

5. Procédé selon l'une des revendications 1 à 4, dans lequel la ou les longueurs d'onde du rayonnement est ou sont comprises entre 0,75 µm et 1,5 mm.

6. Procédé en deux étapes, d'activation ou de réactivation ou de régénération d'un catalyseur renfermant des traces hydrocarbonées, du soufre et du carbone, la première étape étant effectuée en vue de stripper les hydrocarbures et d'éliminer une partie au moins du soufre, la deuxième étape étant effectuée en vue d'éliminer au moins en partie le carbone, caractérisé en ce que au moins la deuxième étape est effectuée selon le procédé de l'une des revendications 1 à 5.

7. Procédé selon la revendication 6, dans lequel on utilise successivement la même chambre allongée pour réaliser chacune des deux étapes ou dans lequel on utilise deux chambres allongées distinctes pour réaliser chacune des deux étapes.

8. Procédé selon la revendication 6, dans lequel la première étape est effectuée dans un four rotatif comportant une zone allongée sensiblement cylindrique et horizontale qui tourne lentement sur elle-même autour de son axe longitudinal et dans laquelle les particules catalytiques sont brassées avec au moins un gaz, entre 170 et 350°C, le gaz étant introduit tout le long de la chambre à travers des ouvertures pratiquées dans les parois de ladite chambre.

9. Procédé selon la revendication 6, dans lequel la première étape est effectuée dans un four rotatif comportant une zone allongée sensiblement cylindrique et horizontale qui tourne lentement sur elle-même autour de son axe longitudinal et dans laquelle les particules catalytiques sont brassées avec au moins un gaz, entre 170 et 245°C ou entre 180 et 290°C, le gaz étant introduit tout le long de la chambre à travers des ouvertures pratiquées dans les parois de ladite chambre.

10. Procédé selon l'une des revendications 1 à 9, dans lequel l'épaisseur de la couche des particules catalytiques est comprise entre 0,5 et 80 mm, le temps de séjour étant compris entre 1 et 50 minutes.

11. Appareil pour la mise en oeuvre du procédé effectué selon l'une des revendications 1 à 10 et comportant (voir figure 3):

— au moins une chambre (1) allongée dont l'axe longitudinal fait un angle avec l'horizontale compris entre 0 et ±5°,

— des moyens (2) pour introduire des particules solides à une extrémité de la chambre,

— des moyens (3) pour soutirer les particules solides à l'autre extrémité de la chambre,

— une auge (4) disposée sur au moins la majeure partie de la longueur de la chambre allongée, soutenant au moins une paroi (5) utilisée comme tapis pour le cheminement des particules catalytiques introduites dans ladite chambre,

— des moyens (6) pour engendrer de l'énergie vibratoire, et provoquer des vibrations de l'auge qui engendrent les vibrations d'au moins ladite paroi nécessaires en vue d'obtenir le déplacement des particules catalytiques sur cette paroi depuis l'entrée des particules dans ladite chambre jusqu'à leur sortie,

— des moyens de chauffage des particules catalytiques, ces moyens étant constitués d'au moins une plaque en forme de cassette (7), ladite plaque étant disposée au-dessus d'au moins la paroi et émettant une onde ou un spectre d'ondes qui a pour but de chauffer lesdites particules qui circulent sur lesdites parois.

12. Appareil selon la revendication 11, dans lequel ladite auge soutient une pluralité de parois (5) adjacentes et toutes en pente douce, (par rapport à l'axe longitudinal de la chambre allongée) le niveau supérieur de chaque paroi étant placé vers l'extrémité de la chambre par laquelle on soutire les particules solides, l'angle d'inclinaison de chaque paroi, par rapport audit axe longitudinal, étant inférieur à ±15°, lesdites parois étant utilisées comme tapis pour soutenir les particules catalytiques introduites dans ladite chambre.

13. Appareil selon l'une des revendications 11 et 12, dans lequel la ou lesdites parois sont discontinues, c'est-à-dire perforées sur au moins la majeure partie de leur section de façon à permettre la circulation d'un gaz à travers cette ou ces parois, l'appareil comportant en outre des moyens d'extraction d'air à travers le lit des particules catalytiques.

14. Appareil selon l'une des revendications 11 et 13, dans lequel la distance entre la ou les parois et la source des moyens engendrant l'énergie vibratoire est comprise entre 40 et 400 mm.

15. Appareil comportant en combinaison deux fours disposés en série, des moyens de transfert du matériel solide du premier four vers le deuxième four, et caractérisé d'une part en ce que le premier four comporte (voir figure 1):

— une chambre (21) allongée fermée, sensiblement horizontale, et des moyens permettant d'effectuer un mouvement lent de rotation de ladite chambre autour de son axe longitudinal,

— des moyens distincts (30) et (24) d'introduction de gaz chaud(s) et de particules solides de catalyseur à l'une des extrémités de ladite chambre,

— des lumières (23) disposées sensiblement tout le long de ladite chambre à travers lesquelles le ou les gaz pénètrent à l'intérieur d'une coquille (22) qui sert de support aux particules catalytiques pendant leur séjour dans ladite chambre,

— des moyens de soutirage (25) et (33) du ou des gaz et des particules catalytiques, et d'autre part, au titre de deuxième four, un appareil tel que défini aux revendications 11 à 14.

**Claims**

1. A process for activating or reactivating or regenerating solid catalyst particles used for the treatment or conversion of hydrocarbons, process comprising at least one step of heating the catalyst particles and characterized in that said step includes (a) the continuous displacement of said catalyst particles through at least one elongate chamber whose longitudinal axis is inclined to a horizontal line at an angle comprised between 0 and ±5°), said particles progressing from an inlet zone of said chamber to an outlet zone of said chamber, over at least one wall or floor whose inclination angle with respect to the axis of the elongate chamber is comprised between 0 and ±15°C, the movement being imparted to the particles by causing the elongate chamber to vibrate, by means of vibratory power, at such an amplitude that a translation movement is imparted to said catalyst particles over the length of said chamber, with a substantially uniform statistical distribution over the section of said chamber, a differential feed producing the continuous circulation of the particles, and (b) the heating of said particles in said chamber by means of at least one zone emitting an electro-magnetic radiation whose wave length or wave lengths (identical or different) are comprised between 0.38 µm and 50 mm.

2. A process according to claim 1, wherein, in order that each catalyst particle may expose all of its geometrical surfaces to the electro-magnetic radiation, said elongate chamber comprises several adjacent walls, of inclination angle lower than ±15° (with respect to the longitudinal axis of the elongate chamber) and arranged substantially over the whole length of said chamber, thus making each catalyst particle to fall from one wall to the next wall in such a manner as to expose to the radiation another part of its geometrical surface.

3. A process according to claim 1, wherein said wall is discontinuous so that a gas may flow into said chamber through the bed of catalyst particles.

4. A process according to any of claims 1 to 3, wherein the one or more radiation wave lengths is or are comprised between about 0.5 µm and 15 mm.

5. A process according to any of claims 1 to 4, wherein the one or more radiation wave lengths is or are comprised between 0.75 µm and 1.5 mm.

6. A two-step process of activation or reactivation or regeneration of a catalyst containing hydrocarbon traces, sulfur and carbon, the first step being effected so as to strip the hydrocarbons and remove at least a portion of the sulfur, the second step being effected so as to remove at least a part of the carbon, characterized in that at least the second step is effected according to the process of one of the claims 1 to 5.

7. A process according to claim 6, comprising the successive use of the same elongate chamber to effect each of the two steps or making use of two separate elongate chambers each for effecting one of the two steps.

8. A process according to claim 6, wherein the first step is effected in a revolving furnace comprising an elongate, substantially cylindrical and horizontal zone, slowly revolving on its longitudinal axis and wherein the catalyst particles are stirred by means of at least one gas, between 170 and 350°C, the gas being introduced all along the chamber through openings provided through the walls of said chamber.

9. A process according to claim 6, wherein the first step is effected in a revolving furnace comprising an elongate, substantially cylindrical and horizontal zone, slowly revolving on its longitudinal axis and wherein the catalyst particles are stirred by means of at least one gas, between 170 and 245°C or between 180 and 290°C, the gas being introduced all along the chamber through openings provided through the walls of said chamber.

10. A process according to one of claims 1 to 9, wherein the thickness of the catalyst particles layer is comprised between 0.5 and 80 mm, the residence time being from 1 to 50 minutes.

11. An apparatus for carrying out the process according to any of claims 1 to 10, and comprising (see Figure 3):
— at least one elongate chamber (1) whose longitudinal axis is inclined to a horizontal line at an angle from 0 to ± 5°,
— means (2) for introducing solid particles at one end of the chamber,
— means (3) for withdrawing the solid particles at the other end of the chamber,
— a trough (4) provided over at least the major part of the length of the elongate chamber, supporting at least one floor or wall (5) used as band for the displacement of the catalyst particles introduced into said chamber,
— means (6) for generating vibratory power and for imparting vibrations to the trough, which generates vibrations of at least said wall, necessary to obtain the displacement of the catalyst particles on the said wall from the inlet of the particles in said chamber to their outlet,
— means for heating catalyst particles, said means consisting of at least one plate shaped as a box (7), said plate being located above at least the wall and emitting a wave or a wave spectrum having the object of heating said particles moving on said walls.

12. An apparatus according to claim 11, wherein said trough supports a plurality of adjacent floors or walls (5) all in gentle slope (with respect to the longitudinal axis of the elongate chamber), the upper level of each wall being located towards the end of the chamber wherefrom are withdrawn the solid particles, the inclination angle of each wall, with respect to said longitudinal axis, being lower than ± 15°, said wall being used as band for supporting the catalyst particles introduced into said chamber.

13. An apparatus according to claim 11 or 12, wherein said one or more walls are discontinuous, i.e. perforated over at least the major part of their section so as to give passage to a gas stream through said wall or walls, said apparatus further comprising means for extracting air through said catalyst particles bed.

14. An apparatus according to claim 11 or 13, wherein the distance between the one or more walls and the source of the vibratory power generating means is comprised between 40 and 400 mm.

15. An apparatus comprising in combination two serially arranged furnaces, means for transferring solid material from the first furnace to the second furnace and characterized on the one hand, in that the first furnace comprises (see Figure 1):
— a closed elongate chamber (1), substantially horizontal, and means for imparting a slow rotatory movement to said chamber on its longitudinal axis,
— separate means (10) and (4) for introducing hot gas(es) and solid particles of catalyst at one of the ends of said chamber,
— slots (3) provided substantially all along said chamber and wherethrough the one or more gases penetrate inside the shell (2) used as support for the catalyst particles during their residence in said chamber,
— withdrawing means (5) and (13) for the one or more gas(es) and the catalyst particles, and on the other hand, as second furnace, an apparatus such as described in claims 11 to 14.

**Patentansprüche**

1. Verfahren zum Aktivieren oder Reaktivieren oder Regenerieren von festen katalytischen Partikeln, welche zur Behandlung oder Umwandlung von Kohlenwasserstoffen verwendet werden, wobei das Verfahren wenigstens eine Stufe zum Aufheizen der katalytischen Partikel umfasst und dadurch gekennzeichnet ist, dass zur Durchführung dieser Stufe man (a) kontinuierlich diese katalytischen Partikel in wenigstens eine längliche Kammer (ihre Längsachse bildet gegenüber der Horizontalen einen Winkel zwischen 0 und ± 5°) einlaufen lässt, wobei diese Partikel von einer Eintrittszone in diese Kammer bis zu einer Austrittszone aus dieser Kammer auf wenigstens einer Wand wandern, deren Neigungswinkel, bezogen auf die Achse der länglichen Kammer, zwischen 0 und ± 15° liegt, wobei das Wandern der Partikel dadurch herbeigeführt wird, dass man die längliche Kammer zum Vibrieren mittels Schwingungsenergie auf eine Amplitude derart bringt, dass eine Translationsbewegung diesen katalytischen Partikeln auf der Länge der Kammer mit einer statistischen Verteilung erteilt wird, die im wesentlichen über den Kammerquerschnitt gleichförmig ist und dies bei einer Differenzgeschwindigkeit, welche für die kontinuierliche Zirkulation der Partikel sorgt und dass man (b) für das Aufheizen dieser Partikel in dieser Kammer mittels wenigstens einer elektromagnetische Strahlung aussendenden Zone sorgt, deren Wellenlänge oder deren Wellenlänge (identisch oder unterschiedlich) zwischen etwa 0,38 μm und 50 mm betragen.

2. Verfahren nach Anspruch 1, dadurch gekennzeichnet, dass, damit jeder katalytische Partikel, ihre sämtlichen geometrischen Flächen der elektromagnetischen Strahlung darbieten kann, diese längliche Kammer mehrere benachbarte Wandungen einschliesst, deren Neigungswinkel kleiner als ± 15° (bezogen auf die Längsachse der länglichen Kammer) ist und die im wesentlichen über die gesamte Länge der Kammer angeordnet sind und es so jeder katalytischen Partikel ermöglicht, wenn sie von einer Wandung auf die folgende fällt, der Strahlung einen anderen Teil ihrer geometrischen Oberfläche darzubieten.

3. Verfahren nach Anspruch 1, dadurch gekennzeichnet, dass diese Wandung diskontinuierlich derart ist, dass ein Gas in dieser Kammer durch das Bett aus katalytischen Partikeln zirkulieren kann.

4. Verfahren nach einem der Ansprüche 1 bis 3, dadurch gekennzeichnet, dass die Wellenlänge(n) der Strahlung zwischen etwa 0,5 μm und 15 mm liegt bzw. liegen.

5. Verfahren nach einem der Ansprüche 1 bis 4, dadurch gekennzeichnet, dass die Wellenlänge(n) der Strahlung zwischen 0,75 μm und 1,5 mm beträgt bzw. betragen.

6. Verfahren in zwei Stufen zur Aktivierung oder Reaktivierung oder Regenerierung eines Kohlenwasserstoffspuren des Schwefels oder Kohlenstoffs enthaltenden Katalysators, wobei die erste Stufe durchgeführt wird, um die Kohlenwasserstoffe zu strippen und einen Teil wenigstens des Schwefels zu eliminieren und die zweite Stufe durchgeführt wird, um wenigstens zum Teil den Kohlenstoff zu eliminieren, dadurch gekennzeichnet, dass wenigstens die zweite Stufe nach dem Verfahren eines der Ansprüche 1 bis 5 durchgeführt wird.

7. Verfahren nach Anspruch 6, dadurch gekennzeichnet, dass man nacheinander die gleiche längliche Kammer verwendet, um jede der beiden Stufen durchzuführen oder dass man zwei längliche unterschiedliche Kammern zur Durchführung der beiden Stufen verwendet.

8. Verfahren nach Anspruch 6, dadurch gekennzeichnet, dass die erste Stufe in einem Drehofen mit einer länglichen im wesentlichen zylindrischen und horizontalen Zone durchgeführt wird, die sich langsam um sich selbst um ihre Längsachse dreht und in welcher die katalytischen Partikel mit wenigstens einem Gas zwischen 170 und 350°C verstrichen werden, wobei das Gas längs der Kammer über Öffnungen, die in den Wandungen der Kammer ausgespart sind, eingeführt wird.

9. Verfahren nach Anspruch 6, dadurch gekennzeichnet, dass die erste Stufe in einem Drehrohrofen mit einer länglichen im wesentlichen zylindrischen und horizontalen Zone durchgeführt wird, der sich langsam um seine Längsachse dreht und in welchem die katalytischen Partikel entweder mit einem Gas zwischen 170 und 245°C oder zwischen 180 und 290°C durchrührt oder verwirbelt werden, wobei das Gas längs der gesamten Kammer über in den Wandungen der Kammer ausgesparte Öffnungen eingeführt wird.

10. Verfahren nach einem der Ansprüche 1 bis 9, dadurch gekennzeichnet, dass die Dicke der Schicht der katalytischen Partikel zwischen 0,5 und 80 mm, die Verweilzeit zwischen 1 und 50 Minuten beträgt.

11. Vorrichtung zur Durchführung des Verfahrens nach einem der Ansprüche 1 bis 10 mit (Fig. 3):
— wenigstens einer länglichen Kammer (1), deren Längsachse mit der Horizontalen einen Winkel von 0 und ± 5° bildet,
— Einrichtungen (2), um Feststoffpartikel an einem Ende der Kammer zuzuführen,
— Einrichtungen (3), welche Feststoffpartikel am anderen Ende der Kammer absaugen,
— einer Rinne (4), die wenigstens über den grössten Teil der Länge der länglichen Kammer angeordnet ist und wenigstens eine Wand (5) abstützt, welche wie ein Band zum Führen der in diese Kammer eingeführten katalytischen Partikel verwendet wird,
— Einrichtungen (6), welche Schwingungsenergie erzeugen und für Vibrationen der Rinne oder des Troges sorgen, welche zu Vibrationen wenigstens der Wandung führen und notwendig sind, um eine Weiterbewegung der katalytischen Partikel auf dieser Wandung vom Eintritt dieser Partikel in die Kammer bis zu deren Austritt zu erhalten,
— Einrichtungen zum Erwärmen der katalytischen Partikel, wobei diese Einrichtungen gebildet werden durch wenigstens eine Platte in Kassettenform (7), wobei diese Platte oberhalb wenigstens der Wandung angeordnet ist und eine Welle oder ein Wellenspektrum aussendet, dessen Zweck es ist, diese Partikel, die auf diesen Wandungen zirkulieren, zu erwärmen.

12. Vorrichtung nach Anspruch 11, dadurch gekennzeichnet, dass diese Rinne eine Vielzahl von benachbarten Wandungen (5) trägt oder abstützt, die sämtlich gering (bezogen auf die Längsachse der länglichen Kammer) geneigt sind, wobei das obere Niveau jeder Wandung gegen das Ende der Kammer angeordnet ist, über das man die Feststoffpartikel abzieht, wobei der Neigungswinkel jeder Kammer, bezogen auf diese Längsachse, kleiner als ± 15° ist, wobei diese Wandungen als Förderband Verwendung finden, um die in diese Kammer eingeführten katalytischen Partikel zu tragen.

13. Vorrichtung nach einem der Ansprüche 11 und 12, dadurch gekennzeichnet, dass diese Wandung(en) diskontinuierlich ist bzw. sind, d.h. über wenigstens den grösseren Teil ihres Querschnitts derart perforiert sind, dass sie die Zirkulation eines Gases durch diese Wandungen hindurch ermöglichen, wobei die Vorrichtung im übrigen Einrichtungen zum Abziehen der Luft quer durch das Bett aus katalytischen Partikeln umfasst.

14. Vorrichtung nach einem der Ansprüche 11 und 13, dadurch gekennzeichnet, dass die Entfernung zwischen der Wandung (den Wandungen) und der Quelle der Schwingungsenergie erzeugenden Einrichtungen zwischen 40 und 400 mm liegt.

15. Vorrichtung, die in Kombination zwei in Reihe angeordnete Öfen sowie Einrichtungen zum Überführen von Feststoffmaterial aus dem ersten Ofen zum zweiten Ofen aufweist, und gekennzeichnet einerseits dadurch, dass der erste Ofen umfasst (siehe Fig. 1):

— eine längliche geschlossene im wesentlichen horizontale Kammer (21) sowie Einrichtungen, die eine langsame Drehbewegung dieser Kammer um ihre Längsachse gestattet,

— unterschiedliche Einrichtungen (30) und (24) zum Einführen heissen Gases bzw. heisser Gase sowie von Katalysatorfeststoffpartikeln an einem der Enden dieser Kammer,

— Schlitze (23), die im wesentlichen längs dieser Kammer angeordnet sind, über die das oder die Gase in das Innere einer Schale (22) eindringen, die als Träger für die katalytischen Partikel während ihrer Verweilzeit in dieser Kammer dient,

— sowie Einrichtungen zum Abziehen (25) und (33) des oder der Gase und der katalytischen Partikel und andererseits als zweitem Ofen eine Vorrichtung, wie sie in den Ansprüchen 11 bis 14 definiert ist.

## FIG.1

## FIG.2

0 123 565

**FIG.3**

**FIG.4**

15

## FIG.5

## FIG.5A